# FASCICULE DE BREVET EUROPEEN

(11) **EP 4 551 428 B1**
(45) Date de publication et mention de la délivrance du brevet: **06.05.2026**
(21) Numéro de dépôt: 23751328.8
(22) Date de dépôt: 03.07.2023
(51) Int. Cl.: B60L 53/24, B60L 53/22, B60L 58/21, B64D 27/24, B64D 31/00, B64D 33/00, B64D 35/00, B64D 35/021, B64D 27/34, B64D 27/357, B64D 27/31, H02M 1/00, H02M 7/04, B60L 3/00, B64D 35/02

(54) **CHAÎNE PROPULSIVE ÉLECTRIQUE POUR AÉRONEF ET PROCÉDÉ DE CHARGE D'UNE BATTERIE D'AÉRONEF**
ELEKTRISCHER ANTRIEBSSTRANG FÜR FLUGZEUG UND VERFAHREN ZUM LADEN EINER BATTERIE EINES FLUGZEUGS
ELECTRIC PROPULSION DRIVETRAIN FOR AIRCRAFT AND METHOD FOR CHARGING A BATTERY OF AN AIRCRAFT

(30) Priorité: 08.07.2022 FR 2207018
(43) Date de publication de la demande: 14.05.2025
(73) Titulaire: Safran Electrical & Power, 31702 Blagnac Cedex (FR)
(72) Inventeur: CHAPERON, Vincent, 77550 MOISSY CRAMAYEL (FR)
(74) Mandataire: Casalonga
(86) Numéro de dépôt international: PCT/FR2023/051011
(87) Numéro de publication internationale: WO 2024/009028

(56) Documents cités:
- EP-A1- 2 896 532
- EP-A1- 3 296 212
- EP-A1- 3 588 729
- FR-A1- 3 065 840
- FR-A1- 3 078 454
- FR-A1- 3 108 891
- US-A1- 2012 025 032

## Description

### Domaine technique de l'invention

L'invention concerne les systèmes de propulsion électrique d'aéronef, et plus particulièrement les dispositifs de charge de batteries de propulsion et un procédé de charge de batterie.

L'invention concerne en outre une chaîne propulsive comportant de tels dispositifs et un aéronef comportant une telle chaîne propulsive.

### Etat de la technique antérieure

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi ceux en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment les équipements embarqués allégés, le développement de l'emploi des technologies électriques pour assurer la propulsion.

Un aéronef à propulsion électrique comprend au moins un moteur électrique entraînant une hélice de propulsion, au moins une batterie stockant l'énergie électrique nécessaire à l'alimentation du moteur, et un convertisseur de puissance alimentant le moteur en tension alternative à partir d'une tension continue délivrée par la batterie.

La charge de la batterie est effectuée lorsque l'aéronef est stationné au sol.

A cet effet, un groupe de parc fournissant une tension alternative est relié à l'aéronef pour charger la batterie.

Cependant, comme le groupe de parc délivre une tension alternative généralement triphasée, il est nécessaire de convertir ladite tension est une tension continue pour charger la batterie.

Il est connu d'implémenter dans le groupe de parc un convertisseur de puissance pour transformer la tension alternative délivrée par le groupe de parc en une tension continue chargeant la batterie.

Cependant, il est nécessaire de développer une nouvelle architecture de groupe de parc et de rajouter un module de communication entre le groupe de parc et un module de gestion de charge de la batterie implémenté dans l'aéronef afin de réguler la charge de la batterie.

Il est également connu d'embarquer dans l'aéronef un convertisseur de puissance pour transformer la tension alternative délivrée par le groupe parc en une tension continue chargeant la batterie.

Cependant, l'implémentation d'un convertisseur de puissance et des harnais de câblage alimentant ledit convertisseur de puissance en tension triphasée augmentent la masse de l'aéronef engendrant une augmentation de la consommation d'énergie de l'aéronef, le convertisseur de puissance étant exclusivement dédié à la charge de la batterie. US 2012/025032 A1 et FR 3 065 840 A1 divulguent également une chaîne propulsive électrique pour aéronef, comportant un dispositif de charge d'une batterie, une première machine tournante de propulsion configurée pour entraîner une hélice de propulsion de l'aéronef, une deuxième machine électrique tournante de propulsion configurée pour entraîner une hélice de propulsion de l'aéronef, un dispositif de distribution électrique, une première batterie, une deuxième batterie et un premier convertisseur de puissance. EP 3 588 729 A1 divulgue une chaîne propulsive électrique pour aéronef comportant une première et deuxième batterie, et deux moteurs, chacun relié à un convertisseur de puissance.

### Exposé de l'invention

Le but de l'invention est de pallier tout ou partie de ces inconvénients.

A cet effet, l'invention est le résultat des recherches technologiques visant à améliorer de manière très significative les performances des avions et, en ce sens, contribue à la réduction de l'impact environnemental des avions. Pour cela, l'invention concerne une chaîne propulsive électrique pour aéronef comportant un dispositif de charge d'une batterie, une première machine électrique tournante de propulsion configurée pour entraîner une hélice de propulsion de l'aéronef, une deuxième machine électrique tournante de propulsion configurée pour entraîner une hélice de propulsion de l'aéronef, un dispositif de distribution électrique, une première batterie, une deuxième batterie et un premier convertisseur de puissance.

Le dispositif de charge comprend un deuxième convertisseur de puissance électrique réversible comportant une entrée de puissance configurée pour être reliée à la deuxième batterie et une sortie de puissance reliée à la deuxième machine électrique tournante de propulsion de sorte que le deuxième convertisseur de puissance transfère de l'énergie électrique entre la deuxième machine électrique et la deuxième batterie.

Le dispositif de charge comprend en outre un moyen de désactivation de l'hélice de propulsion configuré pour empêcher la rotation de l'hélice de propulsion, et une prise de parc reliée à la sortie de puissance.

Le dispositif de distribution électrique comporte une ligne d'alimentation électrique comportant une entrée reliée à la deuxième batterie et une sortie reliée à l'entrée de puissance du deuxième convertisseur.

Le dispositif de distribution électrique comporte une deuxième ligne d'alimentation électrique comprenant une entrée reliée à la première batterie et une sortie reliée à une entrée du premier convertisseur de puissance.

Chaque ligne d'alimentation électrique comprend un bus d'alimentation électrique relié à l'entrée de ladite ligne d'alimentation par un premier contacteur et relié à la sortie de ladite ligne d'alimentation par un deuxième contacteur, un premier capteur de tension mesurant une tension entre ladite entrée et le premier contacteur, un deuxième capteur de tension mesurant une tension entre le deuxième contacteur et le convertisseur, un premier capteur de courant mesurant un courant entre le premier contacteur et le bus et un deuxième capteur de courant mesurant un courant entre le deuxième contacteur et le convertisseur relié à ladite ligne d'alimentation, et un circuit de commande configuré pour commander le convertisseur et les premier et deuxième contacteurs à partir des valeurs mesurées par les premier et deuxième capteurs de tension et des valeurs mesurées par les premier et deuxième capteurs de courant.

Le dispositif de distribution comporte en outre un contacteur de distribution reliant le bus d'alimentation électrique de la ligne d'alimentation au bus d'alimentation électrique de la deuxième ligne d'alimentation électrique, le circuit de commande étant configuré pour commander le contacteur de distribution.

Le dispositif de charge permet de charger les batteries d'un aéronef à partir d'un groupe de parc connu de l'état de la technique sans implémenter un convertisseur de puissance dédié à la charge des batteries dans l'aéronef de manière à ne pas augmenter la masse de l'aéronef.

La charge des batteries met en œuvre un convertisseur de puissance déjà présent dans l'aéronef pour commander une machine tournante de propulsion de l'aéronef.

Il est également proposé la chaîne propulsive électrique pour aéronef telle que définie précédemment, dans laquelle le moyen de désactivation de l'hélice de propulsion comprend un contacteur de charge reliant la sortie de puissance du convertisseur à la machine électrique tournante.

De préférence, le deuxième convertisseur de puissance comprend un premier module de conversion réversible reliant l'entrée de puissance à la sortie de puissance et un deuxième module de conversion reliant une deuxième entrée de puissance à une deuxième sortie de puissance, les modules de conversion étant indépendants l'un de l'autre, le dispositif de distribution électrique comportant une troisième ligne d'alimentation électrique comportant une entrée reliée à la deuxième batterie et une sortie reliée à la deuxième entrée de puissance du deuxième convertisseur, la deuxième machine électrique tournante comprenant deux ensembles de bobines statoriques redondants, un premier ensemble de bobines statoriques étant relié au contacteur de charge et le deuxième ensemble de bobines statoriques étant relié à la deuxième sortie de puissance du convertisseur.

Alternativement, le moyen de désactivation de l'hélice de propulsion comprend un embrayage configuré pour débrayer l'hélice de propulsion d'un arbre de la machine électrique tournante de propulsion pour empêcher la rotation de l'hélice.

De préférence, le deuxième convertisseur de puissance comprend un premier module de conversion réversible reliant l'entrée de puissance à la sortie de puissance et un deuxième module de conversion reliant une deuxième entrée de puissance à une deuxième sortie de puissance, les modules de conversion étant indépendants l'un de l'autre, le dispositif de distribution électrique comportant une troisième ligne d'alimentation électrique comportant une entrée reliée à la deuxième batterie et une sortie reliée à la deuxième entrée de puissance du convertisseur, la deuxième machine électrique tournante comprenant deux ensembles de bobines statoriques redondants, un premier ensemble de bobines statoriques étant relié à la sortie de puissance et le deuxième ensemble de bobines statoriques étant relié à la deuxième sortie de puissance du convertisseur.

De préférence, la chaîne propulsive électrique comporte en outre un contacteur de redistribution reliant le bus d'alimentation électrique de la ligne d'alimentation électrique au bus d'alimentation électrique de la troisième ligne d'alimentation électrique, le circuit de commande étant en outre configuré pour commander le contacteur de redistribution.

Avantageusement, le circuit de commande est en outre configuré pour commander un groupe de parc alimentant la prise de parc lorsque l'hélice de propulsion est empêchée de tourner.

Il est également proposé un aéronef comportant une chaîne propulsive électrique telle que définie précédemment et autant de nacelle de propulsion que de machine électrique tournante de propulsion, chaque machine électrique étant disposée dans une nacelle différente, le moyen de désactivation de l'hélice de propulsion et la prise de parc étant disposés dans l'une des nacelles.

La prise de parc disposée dans l'une des nacelles de l'aéronef, par exemple dans la partie basse de la nacelle, permet de supprimer le harnais de charge reliant la prise de parc au dispositif de distribution permettant de réduire encore plus la masse de l'aéronef.

Par ailleurs, un procédé de charge d'une batterie d'aéronef particulièrement avantageux dans le but de réduire l'impact environnemental des avions, est proposé. L'aéronef comprend une première machine électrique tournante de propulsion, un premier convertisseur de puissance, une première batterie, un deuxième convertisseur de puissance électrique réversible comportant une entrée de puissance reliée à une deuxième batterie et une sortie de puissance reliée à une deuxième machine électrique tournante de propulsion de l'aéronef de sorte que le convertisseur de puissance transfère de l'énergie électrique entre la deuxième machine électrique et la deuxième batterie, et un dispositif de distribution électrique comportant une ligne d'alimentation comprenant une entrée reliée à la deuxième batterie et une sortie reliée à l'entrée de puissance du deuxième convertisseur, une deuxième ligne d'alimentation comprenant une entrée reliée à la première batterie et une sortie reliée à une entrée de puissance du premier convertisseur, et un contacteur de distribution.

Chaque ligne d'alimentation comprend un bus d'alimentation électrique relié à l'entrée de ladite ligne d'alimentation par un premier contacteur et relié à la sortie de ladite ligne d'alimentation par un deuxième contacteur, un premier capteur de tension mesurant une tension entre ladite entrée et le premier contacteur, et un deuxième capteur de tension mesurant une tension entre le deuxième contacteur et le convertisseur, un premier capteur de courant mesurant un courant entre le premier contacteur et le bus et un deuxième capteur de courant mesurant un courant entre le deuxième contacteur et le convertisseur relié à ladite ligne d'alimentation.

Le contacteur de distribution relie le bus d'alimentation électrique de la ligne d'alimentation au bus d'alimentation électrique de la deuxième ligne d'alimentation électrique.

Le procédé comprend l'activation d'un moyen de désactivation de l'hélice de propulsion pour empêcher la rotation de l'hélice de propulsion et l'alimentation d'une prise de parc reliée à la sortie de puissance lorsque l'hélice est empêchée de tourner de sorte que le deuxième convertisseur de puissance transfère de l'énergie électrique de la prise de parc vers la deuxième batterie.

Le procédé comprend en outre la fermeture du deuxième contacteur de la ligne d'alimentation et du contacteur de redistribution, l'ouverture du deuxième contacteur de la deuxième ligne d'alimentation, et la commande du deuxième convertisseur de puissance à partir des valeurs mesurées par les premier et deuxième capteurs de courant et de tension de la ligne d'alimentation et de la deuxième ligne d'alimentation de sorte que le convertisseur de puissance transfère de l'énergie électrique de la prise de parc vers la première batterie.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement un aéronef selon l'invention ;
[Fig 2] illustre schématiquement un exemple de réalisation du dispositif de distribution électrique selon l'invention ;
[Fig 3] illustre schématiquement un premier exemple de mise en œuvre d'un dispositif de charge selon l'invention ;
[Fig 4] illustre schématiquement un deuxième exemple de mise en œuvre du dispositif de charge selon l'invention, et
[Fig 5] illustre schématiquement un autre exemple de réalisation du dispositif de charge.

### Exposé détaillé d'au moins un mode de réalisation

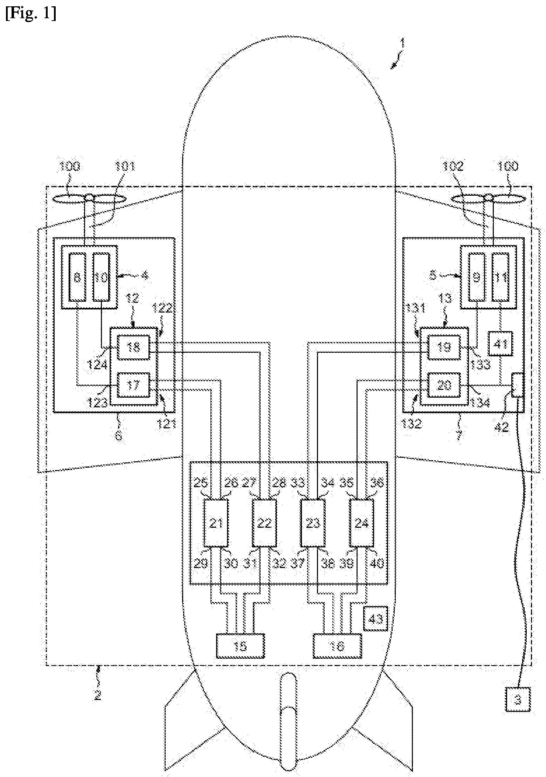

On se réfère à la figure 1 qui illustre schématiquement un aéronef 1 comprenant une chaîne propulsive 2 électrique reliée à un groupe de parc 3.

La chaîne propulsive 2 comprend deux machines électriques tournantes 4, 5 polyphasées de propulsion disposées chacune dans une nacelle 6, 7 de part et d'autre d'un axe longitudinal de l'aéronef 1 et comportant des arbres 101, 102 respectifs munis chacun d'une hélice 100 pour propulser l'aéronef 1.

Une première machine tournante 4 est disposée dans une première nacelle 6, et la deuxième machine tournante 5 est disposée dans la deuxième nacelle 7.

Les machines 4, 5 sont par exemple du type triphasé.

L'aéronef 1 est par exemple un avion.

En variante, l'aéronef 1 peut comprendre plus de deux machines électriques tournantes 4, 5 disposées en nombre égal de part et d'autre de l'axe longitudinal de l'aéronef 1.

Selon encore une autre variante de la description,

l'aéronef 1 peut comprendre une seule machine électrique tournante.

L'aéronef 1 peut en outre comprendre au moins un turbopropulseur ou un turboréacteur entraîné par une turbomachine brûlant un combustible de sorte que l'aéronef 1 est à propulsion hybride.

Chaque machine électrique tournante 4, 5 comprend un premier ensemble de bobines statoriques 8, 9 et un deuxième ensemble de bobines statoriques 10, 11.

Les bobines de chaque ensemble de bobines 8, 9, 10, 11 sont par exemple reliées entre elles en étoile.

La chaîne propulsive 2 comprend en outre deux convertisseurs de puissance 12, 13, un dispositif de distribution 14, deux batteries 15, 16 reliées au dispositif de distribution 14, et un circuit de commande 43 de la chaîne propulsive 2.

Le premier convertisseur 12 disposé dans la première nacelle 6 est relié à la première machine électrique tournante 4, et le deuxième convertisseur 13 disposé dans la deuxième nacelle 7 est relié à la deuxième machine électrique tournante 5.

Les batteries 15, 16 sont par exemple situées dans la partie basse du fuselage de l'avion, dans un fuselage additionnel de sorte que si l'une des batteries 15, 16 dégage un gaz, celui-ci est éjecté du fuselage additionnel selon une direction orientée vers le sol afin de préserver l'avion.

La localisation des batteries 15, 16 permet de simplifier la réalisation du fuselage en évitant l'implantation de cheminées dans le fuselage pour dégazer les batteries 15, 16.

Chaque convertisseur 12, 13 comprend une première entrée de puissance 121, 131, une deuxième entrée de puissance 122, 132, une première sortie de puissance 123, 133, et une deuxième sortie de puissance 124, 134.

Le dispositif de distribution 14 comprend autant de lignes d'alimentation 21, 22, 23, 24 électrique identiques que d'entrées de puissance 121, 122, 131, 132, chaque ligne d'alimentation 21, 22, 23, 24 étant reliées à une entrée de puissance 121, 122, 131, 132 différente.

La première entrée de puissance 121 du premier convertisseur 12 est reliée à des bornes de sortie 25, 26 d'une première ligne d'alimentation 21, et la deuxième entrée de puissance 122 du premier convertisseur 12 est reliée à des bornes de sortie 27, 28 d'une deuxième ligne d'alimentation 22.

La première sortie de puissance 123 triphasée du premier convertisseur 12 est reliée au premier ensemble de bobines statoriques 8 de la première machine tournante 4, et la deuxième sortie de puissance 124 triphasée du premier convertisseur 12 est reliée au deuxième ensemble de bobines statoriques 10 de la première machine tournante 4.

Le premier convertisseur 12 comprend deux modules de conversion 17, 18 indépendants de sorte que si l'un des modules de conversion 17, 18 est défaillant l'autre module de conversion 18, 17 continue de fonctionner de façon optimale.

Les modules de conversion 17, 18 sont réalisés chacun à partir de semi-conducteurs, par exemple des diodes et de transistors.

Un premier module de conversion 17 relie la première entrée de puissance 121 à la première sortie de puissance 123, et le deuxième module de conversion 18 relie la deuxième entrée de puissance 122 à la deuxième sortie de puissance 124.

Chaque module de conversion 17, 18 reçoit une tension continue sur l'entrée de puissance 121, 122 et délivre un système de tension triphasée sur la sortie de puissance 124, 123 pour alimenter et commander la première machine 4.

Des bornes d'entrée 29, 30, 31, 32 des première et deuxième lignes d'alimentation 21, 22 sont reliées à la première batterie 15.

Les première et deuxième lignes d'alimentation 21, 22 alimentent en tension continue les modules de conversion 17, 18 à partir de la première batterie 15.

Les ensembles de bobines statoriques 8, 11 sont alimentés chacun par un circuit d'alimentation comportant un module de conversion 17, 18 du premier convertisseur 12 et les première et deuxième lignes d'alimentation 21, 22.

Les circuits d'alimentation permettent d'alimenter de façon redondante la machine tournante 4 afin de parer à une défaillance de l'un des circuits d'alimentation.

La première entrée de puissance 131 du deuxième convertisseur 13 est reliée à des bornes de sortie 33, 34 d'une troisième ligne d'alimentation 23, et la deuxième entrée de puissance 132 du deuxième convertisseur 13 est reliée à des bornes de sortie 35, 36 de la quatrième ligne d'alimentation 24.

Des bornes d'entrée 37, 38, 39, 30 des troisième et quatrième lignes d'alimentation 23, 24 sont reliées à la deuxième batterie 16.

La première sortie de puissance 133 triphasée du deuxième convertisseur 13 est reliée au premier ensemble de bobines statoriques 9 de la deuxième machine tournante 5.

La deuxième sortie de puissance 133 triphasée du deuxième convertisseur 13 est reliée au deuxième ensemble de bobines statoriques **11** de la deuxième machine 5 par l'intermédiaire d'un contacteur de charge 41.

En outre, une prise de parc 42 est reliée entre le contacteur de charge 41 et la deuxième sortie de puissance 134.

Le contacteur de charge 41 et la prise de parc 42 sont disposés dans la nacelle 7 logeant la deuxième machine 5.

La prise de parc 42 est reliée à une sortie de puissance du groupe de parc 3 de sorte que le groupe de parc 3 alimente la prise de parc 42 en énergie électrique, le groupe de parc délivrant par exemple un système de tension triphasée.

Lorsque le contacteur de charge 41 est ouvert l'ensemble des phases du deuxième ensemble de bobines statoriques 11 de la deuxième machine 5 est isolé de la prise de parc 42 de sorte que la groupe de parc 3 alimente exclusivement le deuxième convertisseur 13.

Comme le deuxième ensemble de bobines statoriques 11 de la deuxième machine 5 n'est pas alimenté, l'arbre 102 de ladite machine n'est pas entraîné.

Comme l'hélice 100 relié à l'arbre 102 ne tourne pas, des opérateurs intervenant sur la deuxième nacelle 7 ne sont pas susceptible d'être blessés par l'hélice.

Le circuit de commande 43 commande le premier et deuxième convertisseurs 12, 13, les lignes d'alimentation 21, 22, 23, 24, et le contacteur de charge 41, et comprend par exemple une unité de traitement redondante.

Les lignes d'alimentation 21, 22, 23, 24 peuvent en outre être reliées entre elles par des contacteurs de redistribution et de distribution non représentés sur cette figure.

Lorsque l'avion est en vol, le deuxième convertisseur 13 alimenté par une tension continue sur les entrées de puissance 131, 132 délivre un système de tension triphasée sur les sorties de puissance 133, 134 pour alimenter et commander la deuxième machine 4.

La première sortie de puissance 133 alimente le premier ensemble de bobines 9.

Le contacteur de charge 41 est fermé de sorte que la deuxième sortie de puissance 134 alimente le deuxième ensemble de bobines 11.

Les troisième et quatrième lignes d'alimentation 23, 24 alimentent en tension continue le deuxième convertisseur 13 à partir de la deuxième batterie 16.

Le deuxième convertisseur 13 réversible comprend un module de conversion 19 reliant la première entrée de puissance 131 à la première sortie de puissance 133, et un module de conversion réversible 20 reliant la deuxième entrée de puissance 132 à la deuxième sortie de puissance 134.

Le deuxième convertisseur 13 réversible, le contacteur de charge 41 et la prise de parc 42 forment un dispositif de charge.

Lorsque l'avion est en sol, tel que représenté sur la figure 1, le groupe de parc 3 est relié à la prise de parc 42 et le contacteur de charge 41 est ouvert par le circuit de commande 43 de sorte que la deuxième sortie de puissance 134 et la prise de parc 42 ne sont pas électriquement reliées au deuxième ensemble de bobines 11.

En vol, les ensembles de bobines statoriques 9, 11 sont alimentés chacun par un circuit d'alimentation comportant un module de conversion 19, 20 du deuxième convertisseur 13 et les troisième et quatrième lignes d'alimentation 23, 24.

Les circuits d'alimentation permettent d'alimenter de façon redondante la machine tournante 5 afin de parer à une défaillance de l'un des circuits d'alimentation.

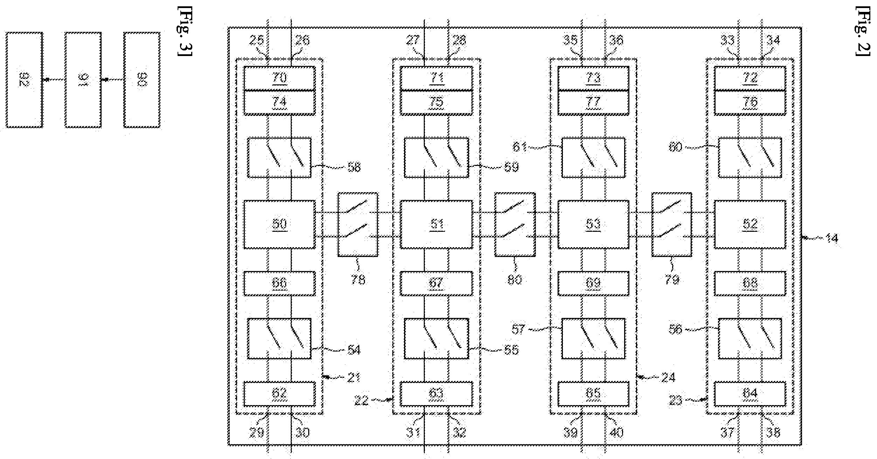

La figure 2 illustre un exemple de réalisation du dispositif de distribution 14 comprenant les lignes d'alimentation 21, 22, 23, 24.

Chaque ligne d'alimentation 21, 22, 23, 24 comprend un bus 50, 51, 52, 53 d'alimentation électrique relié aux bornes d'entrée 29, 30, 31, 32, 37, 38, 39, 40 formants l'entrée de ladite ligne par un premier contacteur 54, 55, 56, 57.

Chaque ligne d'alimentation 21, 22, 23, 24 comprend un deuxième contacteur 58, 59, 60, 61 reliant le bus 50, 51, 52, 53 aux bornes de sortie 25, 26, 27, 28, 33, 34, 35, 36 formant la sortie de ladite ligne.

Chaque ligne d'alimentation 21, 22, 23, 24 comprend en outre un premier capteur de tension 62, 63, 64, 65 mesurant une tension entre l'entrée de ladite ligne et le premier contacteur 54, 55, 56, 57, et un deuxième capteur de tension 70, 71, 72, 73 mesurant une tension entre le deuxième contacteur 58, 59, 60, 61 et le convertisseur 12, 13 relié à ladite ligne.

Chaque ligne d'alimentation 21, 22, 23, 24 peut en outre comprendre un premier capteur de courant 66, 67, 68, 69 mesurant un courant entre le premier contacteur 54, 55, 56, 57 et le bus 50, 51, 52, 53, et un deuxième capteur de courant 74, 75, 76, 77 mesurant un courant entre le deuxième contacteur 58, 59, 60, 61 et le convertisseur 12, 13 relié à ladite ligne.

Le dispositif de distribution 14 peut comprendre en outre deux contacteurs de redistribution 78, 79.

Un premier contacteur de redistribution 78 relie les bus 50, 51 des première et deuxième lignes 21, 22 entre eux, et le deuxième contacteur de redistribution 79 relie les bus 52, 53 des troisième et quatrième lignes 23, 24 entre eux.

Chaque contacteur de redistribution 78, 79 permet d'assurer l'alimentation des deux ensembles de bobines 8, 10, 9, 11 de la machine 4, 5 par une seule ligne d'alimentation.

Le dispositif de distribution 14 peut en outre comprendre un contacteur de distribution 80 reliant le bus 51 de la deuxième ligne 22 au bus 53 de la quatrième ligne 24 reliée au module de conversion réversible 20.

Les convertisseurs 12, 13, les premier et deuxième contacteurs 54, 55, 56, 57, 58, 59, 60, 61, les contacteurs de redistribution 78, 79, et le contacteur de distribution 80 sont commandés par le circuit de commande 43 à partir des valeurs mesurées par les premier et deuxième capteurs de courant et de tension 62 à 77.

La figue 3 illustre schématiquement un premier exemple de mise en œuvre du dispositif de charge pour charger la deuxième batterie 16.

On suppose que le groupe de parc 3 est relié à la prise de parc 42, les premier et deuxième contacteurs 54 à 61 de chacune des lignes 21, 22, 23, 24 et le contacteur de charge 41 sont fermés, que les contacteurs de redistribution 78, 79 et les contacteurs de distribution 80 sont ouverts, et que les convertisseurs 12, 13 sont à l'arrêt (ne transfèrent pas d'énergie électrique entre leurs entrées et sorties de puissance).

Durant une étape 90, le circuit de commande 43 ouvre le contacteur de charge 41.

Durant une étape 91 de charge, lorsque le contacteur de charge 41 est ouvert, le circuit de commande 43 commande le module de conversion 20 réversible du deuxième convertisseur 13 de sorte que le convertisseur 13 transfère de l'énergie électrique de la prise de parc 42 dans la deuxième batterie 16.

Le circuit de commande 43 commande le module de conversion 20 réversible de sorte que la différence des tensions mesurées par les premier et deuxième capteurs de tension 65, 73 de la quatrième ligne 24 est égale à une tension de seuil prédéterminée, la tension mesurée par le premier capteur étant inférieure à la tension mesurée par le deuxième capteur 73 de sorte que la deuxième batterie 16 stocke l'énergie électrique transférée par le deuxième convertisseur 13 tout en limitant l'appel de courant de la deuxième batterie 16 en charge.

Lorsque la valeur mesurée par le premier capteur de tension 65 est égale à une valeur de charge prédéterminée, la deuxième batterie est supposée être chargée. Le circuit de commande 43 commande le deuxième convertisseur 13 de manière à arrêter la charge de la deuxième batterie 16.

Durant l'étape 91 de charge, le circuit de commande 43 relève les valeurs de courant mesurées par les premier et deuxième capteurs de courant 69, 77 afin de détecter une défaillance.

Le circuit de commande 43 compare les valeurs de courant mesurées à des seuils d'alerte prédéterminés.

Si l'une des valeurs de courant mesurées est supérieure au seuil d'alerte associé à ladite valeur, durant une étape 92, le circuit de commande 43 commande le module de conversion 20 réversible de sorte que la tension relevée par le premier capteur de tension 65 est supérieure à la tension relevée par le deuxième capteur de tension 73.

La deuxième batterie 16 délivre de l'énergie électrique afin d'éviter un emballement thermique de la deuxième batterie 16, puis le circuit de commande 43 ouvre au moins l'un des premier et deuxième contacteurs 57, 61 de la quatrième ligne 24.

En variante, le circuit de commande 43 communique avec des moyens de commande du groupe de parc 3.

Le circuit de commande 43 transmet aux moyens de commande une valeur de consigne de tension délivrée par le groupe de parc 3.

La figue 4 illustre schématiquement un deuxième exemple de mise en œuvre du dispositif de charge.

Dans ce mode de mise en œuvre, le dispositif de charge charge la première batterie 15.

On suppose que le groupe de parc 3 est relié à la prise de parc 42, les premier et deuxième contacteurs 54 à 61 de chacune des lignes 21, 22, 23, 24 et le contacteur de charge 41 sont fermés, que les contacteurs de redistribution 78, 79 et les contacteurs de distribution 80 sont ouverts, et que les convertisseurs 12, 13 sont à l'arrêt (ne transfèrent pas d'énergie électrique entre leurs entrées et sorties de puissance).

On retrouve l'étape 90.

Puis durant une étape 95, le circuit de commande 43 ferme le contacteur de distribution 80 de sorte que les bus 51, 53 des deuxième et quatrième lignes 22, 24 sont reliés entre eux, ouvre le premier contacteur 57 de la quatrième ligne 24 et le deuxième contacteur 59 de la deuxième ligne 22.

Durant une étape 96 de charge, lorsque le contacteur de charge 41 est ouvert et le contacteur de distribution 80 est fermé, le premier contacteur 57 de la quatrième ligne 24 et le deuxième contacteur 59 de la deuxième ligne 22 sont ouverts, et le circuit de commande 43 commande le module de conversion 20 réversible du deuxième convertisseur 13 de sorte que le convertisseur 13 transfère de l'énergie électrique de la prise de parc 42 dans la première batterie 15.

Le circuit de commande 43 commande le module de conversion 20 réversible de sorte que la différence des tensions mesurées par le deuxième capteur de tension 73 de la quatrième ligne 24 et le premier capteur de tension 63 de la deuxième ligne 22 est égale à une tension de seuil prédéterminée, la tension mesurée par le premier capteur 63 étant inférieure à la tension mesurée par le deuxième capteur 73 de sorte que la première batterie 15 stocke l'énergie électrique transférée par le deuxième convertisseur 13 tout en limitant l'appel de courant de la première batterie 15 en charge.

Le circuit de commande 3 relève les valeurs de courant mesurées par le premier capteur de courant 67 de la deuxième ligne 22 et le deuxième capteur de courant 77 de la quatrième ligne 24 afin de détecter une défaillance tel que décrit précédemment.

En variante, les première et deuxième batteries 15, 16 sont chargées simultanément par le convertisseur 13 après la fermeture du premier commutateur 57 de la quatrième ligne 24.

Lorsque l'aéronef est au sol, les première et deuxième batteries 15, 16 peuvent être chargées séquentiellement par le dispositif de charge ou simultanément.

Le dispositif de charge permet de charger les batteries de l'aéronef 1 à partir d'un groupe de parc connu de l'état de la technique sans implémenter un convertisseur de puissance dédié à la charge des batteries dans l'aéronef 1 de manière à ne pas augmenter la masse de l'aéronef.

La charge des batteries met en œuvre un convertisseur de puissance déjà présent dans l'aéronef pour commander une machine tournante de propulsion de l'aéronef.

En outre, comme la prise de parc est disposée dans l'une des nacelles de l'aéronef, par exemple dans la partie basse de la nacelle, le harnais de charge reliant la prise de parc au dispositif de distribution est supprimé par rapport à un dispositif de charge connu de l'état de la technique permettant de réduire encore plus la masse de l'aéronef et de simplifier le routage dudit harnais.

Le contacteur de charge 41 forme un moyen de désactivation de l'hélice de propulsion pour empêcher la rotation de l'hélice 100 de propulsion lors de la charge d'au moins l'une des batteries 15, 16.

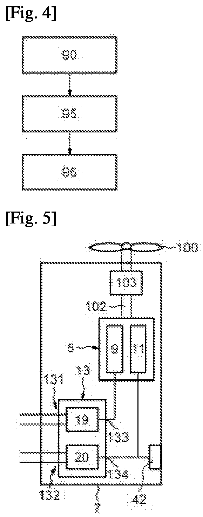

La figure 5 illustre schématiquement un autre exemple de réalisation du dispositif de charge.

Dans ce mode de réalisation, le moyen de désactivation de l'hélice de propulsion comprend un embrayage 103 reliant l'arbre 102 de la deuxième machine électrique tournante 5 à l'hélice 100 de propulsion.

Lorsque le moyen de désactivation de l'hélice de propulsion comprend l'embrayage 103, le circuit de commande 43 commande l'embrayage 103 de sorte que l'arbre 102 est désaccouplé de l'hélice 100 pour empêcher la rotation de l'hélice 100 de propulsion.

Lorsque l'hélice est désaccouplée de l'arbre 102, la prise de parc 42 est alimentée par le groupe de parc et le circuit de commande 43 commande le module de conversion 20 réversible du deuxième convertisseur 13 tel que décrit précédemment.

L'ensemble des phases du deuxième ensemble de bobines statoriques 11 de la deuxième machine 5 est alimenté par le deuxième convertisseur 13 de sorte que l'arbre 102 est entraîné en rotation.

La deuxième machine 5 tourne à vide comme l'hélice est désaccouplée de l'arbre 102.

Comme la deuxième machine 5 tourne à vide, elle consomme une quantité réduite d'énergie.

Comme l'hélice ne tourne pas, des opérateurs intervenant sur la deuxième nacelle 7 ne sont pas susceptible d'être blessés par l'hélice.

## Revendications

1. Chaîne propulsive électrique (2) pour aéronef (1) comportant un dispositif de charge d'une batterie (15, 16), une première machine électrique tournante de propulsion (4) configurée pour entraîner une hélice (100) de propulsion de l'aéronef, une deuxième machine électrique tournante de propulsion (5) configurée pour entraîner une hélice (100) de propulsion de l'aéronef, un dispositif de distribution électrique (14), une première batterie (15), une deuxième batterie (16) et un premier convertisseur de puissance (12),
- le dispositif de charge comprenant un deuxième convertisseur de puissance électrique réversible (13) comportant une entrée de puissance (132) configurée pour être reliée à la deuxième batterie (16) et une sortie de puissance (134) reliée à la deuxième machine électrique tournante (5) de propulsion de sorte que le deuxième convertisseur de puissance transfère de l'énergie électrique entre la deuxième machine électrique et la deuxième batterie,
- le dispositif de charge comprenant en outre un moyen de désactivation de l'hélice de propulsion configuré pour empêcher la rotation de l'hélice (100) de propulsion, et une prise de parc (42) reliée à la sortie de puissance,
- le dispositif de distribution électrique comportant une ligne d'alimentation électrique (24) comportant une entrée (39, 40) reliée à la deuxième batterie (16) et une sortie (35, 36) reliée à l'entrée (132) de puissance du deuxième convertisseur (13),
**caractérisée en ce que**
- le dispositif de distribution électrique (14) comportant une deuxième ligne d'alimentation électrique (22) comprenant une entrée (31, 32) reliée à la première batterie (15) et une sortie (27, 28) reliée à une entrée (122) du premier convertisseur (12) de puissance,
- chaque ligne d'alimentation électrique (21, 22, 23, 24) comprenant un bus d'alimentation électrique (50, 51, 52, 53) relié à l'entrée (29, 30, 31, 32, 37, 38, 39, 40) de ladite ligne d'alimentation par un premier contacteur (54, 55, 56, 57) et relié à la sortie (25, 26, 27, 28, 33, 34, 35, 36) de ladite ligne d'alimentation par un deuxième contacteur (58, 59, 60, 61), un premier capteur de tension (62, 63, 64, 65) mesurant une tension entre ladite entrée et le premier contacteur, un deuxième capteur de tension (70, 71, 72, 73) mesurant une tension entre le deuxième contacteur et le convertisseur (12, 13), un premier capteur de courant (66, 67, 68, 69) mesurant un courant entre le premier contacteur et le bus et un deuxième capteur de courant (74, 75, 76, 77) mesurant un courant entre le deuxième contacteur et le convertisseur relié à ladite ligne d'alimentation, et un circuit de commande (43) configuré pour commander le convertisseur et les premier et deuxième contacteurs à partir des valeurs mesurées par les premier et deuxième capteurs de tension et des valeurs mesurées par les premier et deuxième capteurs de courant,
- le dispositif de distribution comportant en outre un contacteur de distribution (80) reliant le bus d'alimentation (53) électrique de la ligne d'alimentation (24) au bus d'alimentation électrique (51) de la deuxième ligne d'alimentation (22) électrique, le circuit de commande (43) étant configuré pour commander le contacteur de distribution.

2. Chaîne propulsive électrique (2) pour aéronef (1) selon la revendication 1, dans laquelle le moyen de désactivation de l'hélice (100) de propulsion comprend un contacteur de charge (41) reliant la sortie de puissance du deuxième convertisseur (13) à la deuxième machine électrique tournante (5).

3. Chaîne propulsive électrique (2) selon la revendication 2, dans laquelle le deuxième convertisseur de puissance (13) comprend un premier module (20) de conversion réversible reliant l'entrée de puissance (132) à la sortie de puissance (134) et un deuxième module (19) de conversion reliant une deuxième entrée (131) de puissance à une deuxième sortie (133) de puissance, les modules de conversion étant indépendants l'un de l'autre, le dispositif de distribution électrique comportant une troisième ligne (23) d'alimentation électrique comportant une entrée (37, 38) reliée à la deuxième batterie (16) et une sortie (33, 34) reliée à la deuxième entrée de puissance (131) du deuxième convertisseur (13), la deuxième machine électrique tournante (5) comprenant deux ensembles de bobines statoriques (9, 11) redondants, un premier ensemble de bobines statoriques (11) étant relié au contacteur de charge (41) et le deuxième ensemble de bobines statoriques (9) étant relié à la deuxième sortie de puissance (133) du convertisseur (13)

4. Chaîne propulsive électrique (2) pour aéronef selon la revendication 1, dans lequel le moyen de désactivation de l'hélice (100) de propulsion comprend un embrayage (103) configuré pour débrayer l'hélice (100) de propulsion d'un arbre (102) de la machine électrique tournante de propulsion (5) pour empêcher la rotation de l'hélice (100).

5. Chaîne propulsive électrique (2) selon la revendication 4, dans laquelle le deuxième convertisseur de puissance (13) comprend un premier module (20) de conversion réversible reliant l'entrée de puissance (132) à la sortie de puissance (134) et un deuxième module (19) de conversion reliant une deuxième entrée (131) de puissance à une deuxième sortie (133) de puissance, les modules de conversion étant indépendants l'un de l'autre, le dispositif de distribution électrique comportant une troisième ligne (23) d'alimentation électrique comportant une entrée (37, 38) reliée à la deuxième batterie (16) et une sortie (33, 34) reliée à la deuxième entrée de puissance (131) du deuxième convertisseur (13), la deuxième machine électrique tournante (5) comprenant deux ensembles de bobines statoriques (9, 11) redondants, un premier ensemble de bobines statoriques (11) étant relié à la sortie de puissance (134) et le deuxième ensemble de bobines statoriques (9) étant relié à la deuxième sortie de puissance (133) du convertisseur (13).

6. Chaîne propulsive électrique selon la revendication 3 ou selon revendication 5, comportant en outre un contacteur de redistribution (79) reliant le bus d'alimentation électrique (53) de la ligne (24) d'alimentation électrique au bus d'alimentation électrique (52) de la troisième ligne (23) d'alimentation électrique, le circuit de commande (43) étant en outre configuré pour commander le contacteur de redistribution.

7. Chaîne propulsive électrique (2) selon l'une quelconque des revendications 1 à 6, dans laquelle le circuit de commande (43) est en outre configuré pour commander un groupe de parc (3) alimentant la prise de parc (42) lorsque l'hélice (100) de propulsion est empêchée de tourner.

8. Aéronef (1) comportant une chaîne propulsive (2) électrique selon l'une quelconque des revendications 1 à 7 et autant de nacelle (6, 7) de propulsion que de machine électrique tournante (4, 5) de propulsion, chaque machine électrique étant disposée dans une nacelle différente, le moyen de désactivation de l'hélice de propulsion et la prise de parc (42) étant disposés dans l'une des nacelles (7).

9. Procédé de charge d'une batterie (15, 16) d'aéronef (1) comprenant une première machine électrique tournante (4) de propulsion, un premier convertisseur (12) de puissance, une première batterie (15), un deuxième convertisseur de puissance électrique réversible (13) comportant une entrée (132) de puissance reliée à une deuxième batterie (16) et une sortie (134) de puissance reliée à une deuxième machine électrique tournante (5) de propulsion de l'aéronef de sorte que le convertisseur de puissance transfère de l'énergie électrique entre la deuxième machine électrique et la deuxième batterie, et un dispositif de distribution électrique (14) comportant une ligne d'alimentation (24) comprenant une entrée (39, 40) reliée à la deuxième batterie (16) et une sortie (35, 36) reliée à l'entrée (132) de puissance du deuxième convertisseur (13), une deuxième ligne (22) d'alimentation comprenant une entrée (31, 32) reliée à la première batterie (15) et une sortie (27, 28) reliée à une entrée (122) de puissance du premier convertisseur, et un contacteur de distribution (80), chaque ligne d'alimentation comprenant un bus d'alimentation électrique (53, 52) relié à l'entrée de ladite ligne d'alimentation par un premier contacteur (57, 55) et relié à la sortie de ladite ligne d'alimentation par un deuxième contacteur (61, 59), un premier capteur de tension (65, 63) mesurant une tension entre ladite entrée et le premier contacteur, et un deuxième capteur de tension (73, 71) mesurant une tension entre le deuxième contacteur et le convertisseur, un premier capteur de courant (67, 69) mesurant un courant entre le premier contacteur et le bus et un deuxième capteur de courant (75, 77) mesurant un courant entre le deuxième contacteur et le convertisseur relié à ladite ligne d'alimentation, le contacteur de distribution reliant le bus d'alimentation électrique de la ligne d'alimentation au bus d'alimentation électrique de la deuxième ligne d'alimentation électrique, le procédé comprend l'activation d'un moyen de désactivation de l'hélice de propulsion pour empêcher la rotation de l'hélice (100) de propulsion et l'alimentation d'une prise de parc (42) reliée à la sortie de puissance lorsque l'hélice est empêchée de tourner de sorte que le deuxième convertisseur de puissance transfère de l'énergie électrique de la prise de parc vers la deuxième batterie, la fermeture du deuxième contacteur (61) de la ligne d'alimentation (24) et du contacteur de redistribution (80), l'ouverture du deuxième contacteur (59) de la deuxième ligne (22) d'alimentation, et la commande du deuxième convertisseur de puissance (13) à partir des valeurs mesurées par les premier et deuxième capteurs de courant et de tension de la ligne d'alimentation et de la deuxième ligne d'alimentation de sorte que le convertisseur de puissance transfère de l'énergie électrique de la prise de parc vers la première batterie.

## Patentansprüche

1. Elektrische Antriebskette (2) für Luftfahrzeuge (1), die eine Ladevorrichtung für eine Batterie (15, 16), einer ersten drehenden elektrischen Antriebsmaschine (4) aufweist, die so konfiguriert ist, dass sie einen Propeller (100) zum Antrieb des Luftfahrzeugs antreibt, einer zweiten drehenden elektrischen Antriebsmaschine (5), die so konfiguriert ist, dass sie einen Propeller (100) zum Antrieb des Luftfahrzeugs antreibt, einer Stromverteilungsvorrichtung (14), einer ersten Batterie (15), einer zweiten Batterie (16) und einen ersten Leistungswandler (12),
- wobei die Ladevorrichtung einen zweiten reversiblen elektrischen Leistungswandler (13) umfasst, der einen Leistungseingang (132) aufweist, der so konfiguriert ist, dass er mit der zweiten Batterie (16) verbunden ist, und einen Leistungsausgang (134), der mit der zweiten drehenden elektrischen Antriebsmaschine (5) verbunden ist, sodass der zweite Leistungswandler elektrische Energie zwischen der zweiten elektrischen Maschine und der zweiten Batterie überträgt,
- wobei die Ladevorrichtung ferner ein Mittel zur Deaktivierung des Antriebspropellers umfasst, das so konfiguriert ist, dass es die Drehung des Antriebspropellers (100) verhindert, und eine mit dem Leistungsausgang verbundene Parksteckdose (42),
- wobei die Stromverteilungsvorrichtung eine Stromversorgungsleitung (24) aufweist, die einen Eingang (39, 40), der mit der zweiten Batterie (16) verbunden ist, und einen Ausgang (35, 36) aufweist, der mit dem Leistungseingang (132) des zweiten Wandlers (13) verbunden ist,
**dadurch gekennzeichnet, dass**
- wobei die Stromverteilungsvorrichtung (14) eine zweite Stromversorgungsleitung (22) aufweist, die einen Eingang (31, 32), der mit der ersten Batterie (15) verbunden ist, und einen Ausgang (27, 28) aufweist, der mit einem Eingang (122) des ersten Leistungswandlers (12) verbunden ist,
- wobei jede Stromversorgungsleitung (21, 22, 23, 24) einen Stromversorgungsbus (50, 51, 52, 53), der mit dem Eingang (29, 30, 31, 32, 37, 38, 39, 40) der Versorgungsleitung durch ein erstes Schütz (54, 55, 56, 57) verbunden ist und mit dem Ausgang (25, 26, 27, 28, 33, 34, 35, 36) der Versorgungsleitung durch ein zweites Schütz (58, 59, 60, 61) verbunden ist, einen ersten Spannungssensor (62, 63, 64, 65), der eine Spannung zwischen dem Eingang und dem ersten Schütz misst, einen zweiten Spannungssensor (70, 71, 72, 73), der eine Spannung zwischen dem zweiten Schütz und dem Wandler (12, 13) misst, einen ersten Stromsensor (66, 67, 68, 69), der einen Strom zwischen dem ersten Schütz und dem Bus misst, und einen zweiten Stromsensor (74, 75, 76, 77), der einen Strom zwischen dem zweiten Schütz und dem mit der Versorgungsleitung verbundenen Wandler misst, sowie einem Steuerkreis (43) umfasst, der so konfiguriert ist, dass er den Wandler und das erste und das zweite Schütz anhand der von dem ersten und dem zweiten Spannungssensor gemessenen Werte und der von dem ersten und dem zweiten Stromsensor gemessenen Werte zu steuert,
- wobei die Verteilungsvorrichtung ferner ein Verteilerschütz (80) aufweist, das den Stromversorgungsbus (53) der Versorgungsleitung (24) mit dem Stromversorgungsbus (51) der zweiten Stromversorgungsleitung (22) verbindet, wobei der Steuerkreis (43) so konfiguriert ist, dass er das Verteilerschütz steuert.

2. Elektrische Antriebskette (2) für Luftfahrzeuge (1) nach Anspruch 1, wobei das Mittel zur Deaktivierung des Antriebspropellers (100) ein Lastschütz (41) umfasst, das den Leistungsausgang des zweiten Wandlers (13) mit der zweiten drehenden elektrischen Maschine (5) verbindet.

3. Elektrische Antriebskette (2) nach Anspruch 2, wobei der zweite Leistungswandler (13) ein erstes reversibles Umwandlungsmodul (20) umfasst, das den Leistungseingang (132) mit dem Leistungsausgang (134) verbindet, und ein zweites Umwandlungsmodul (19), das einen zweiten Leistungseingang (131) mit einem zweiten Leistungsausgang (133) verbindet, wobei die Umwandlungsmodule voneinander unabhängig sind, wobei die Stromverteilungsvorrichtung eine dritte Stromversorgungsleitung (23) aufweist, die einen Eingang (37, 38), der mit der zweiten Batterie (16) verbunden ist, und einen Ausgang (33, 34) aufweist, der mit dem zweiten Leistungseingang (131) des zweiten Wandlers (13) verbunden ist, wobei die zweite drehende elektrische Maschine (5) zwei redundante Statorspulensätze (9, 11) umfasst, wobei ein erster Statorspulensatz (11) mit dem Lastschütz (41) verbunden ist und der zweite Statorspulensatz (9) mit dem zweiten Leistungsausgang (133) des Wandlers (13) verbunden ist.

4. Elektrische Antriebskette (2) für Luftfahrzeuge nach Anspruch 1, wobei das Mittel zur Deaktivierung des Antriebspropellers (100) eine Kupplung (103) umfasst, die so konfiguriert ist, dass sie den Antriebspropeller (100) von einer Welle (102) der elektrischen drehenden Antriebsmaschine (5) entkuppelt, um die Drehung des Propellers (100) zu verhindern.

5. Elektrische Antriebskette (2) nach Anspruch 4, wobei der zweite Leistungswandler (13) ein erstes reversibles Umwandlungsmodul (20), das den Leistungseingang (132) mit dem Leistungsausgang (134) verbindet, und ein zweites Umwandlungsmodul (19) umfasst, das einen zweiten Leistungseingang (131) mit einem zweiten Leistungsausgang (133) verbindet, wobei die Umwandlungsmodule voneinander unabhängig sind, wobei die Stromverteilungsvorrichtung eine dritte Stromversorgungsleitung (23) aufweist, die einen Eingang (37, 38), der mit der zweiten Batterie (16) verbunden ist, und einen Ausgang (33, 34) aufweist, der mit dem zweiten Leistungseingang (131) des zweiten Wandlers (13) verbunden ist, wobei die zweite drehende elektrische Maschine (5) zwei redundante Statorspulensätze (9, 11) umfasst, wobei ein erster Statorspulensatz (11) mit dem Leistungsausgang (134) verbunden ist und der zweite Statorspulensatz (9) mit dem zweiten Leistungsausgang (133) des Wandlers (13) verbunden ist.

6. Elektrische Antriebskette nach Anspruch 3 oder nach Anspruch 5, die ferner ein Umverteilungsschütz (79) aufweist, das den Stromversorgungsbus (53) der Stromversorgungsleitung (24) mit dem Stromversorgungsbus (52) der dritten Stromversorgungsleitung (23) verbindet, wobei der Steuerkreis (43) ferner so konfiguriert ist, dass er das Umverteilungsschütz steuert.

7. Elektrische Antriebskette (2) nach einem der Ansprüche 1 bis 6, wobei der Steuerkreis (43) ferner so konfiguriert ist, dass er eine Parkgruppe (3) steuert, die die Parksteckdose (42) versorgt, wenn der Antriebspropeller (100) daran gehindert wird, sich zu drehen.

8. Luftfahrzeug (1), das eine elektrische Antriebskette (2) nach einem der Ansprüche 1 bis 7 und sowohl eine Antriebsgondel (6, 7) als auch eine drehende elektrische Antriebsmaschine (4, 5) aufweist, wobei jede elektrische Maschine in einer anderen Gondel angeordnet ist, wobei das Mittel zur Deaktivierung des Antriebspropellers und die Parksteckdose (42) in einem der Gondeln (7) angeordnet sind.

9. Verfahren zum Laden einer Batterie (15, 16) eines Luftfahrzeugs (1), umfassend eine erste drehende elektrische Antriebsmaschine (4), einen ersten Leistungswandler (12), eine erste Batterie (15), einen zweiten reversiblen elektrischen Leistungswandler (13), der einen Leistungseingang (132), der mit einer zweiten Batterie (16) verbunden ist, und einen Leistungsausgang (134) aufweist, der mit einer zweiten drehenden elektrischen Antriebsmaschine (5) für das Luftfahrzeug verbunden ist, sodass der Leistungswandler elektrische Energie zwischen der zweiten elektrischen Maschine und der zweiten Batterie überträgt, und eine Stromverteilungsvorrichtung (14), die eine Versorgungsleitung (24) aufweist, die einen Eingang (39, 40), der mit der zweiten Batterie (16) verbunden ist, und einen Ausgang (35, 36) umfasst, der mit dem Leistungseingang (132) des zweiten Wandlers (13) verbunden ist, eine zweite Versorgungsleitung (22), die einen Eingang (31, 32), der mit der ersten Batterie (15) verbunden ist, und einen Ausgang (27, 28) umfasst, der mit einem Leistungseingang (122) des ersten Wandlers verbunden ist, und ein Verteilerschütz (80), wobei jede Versorgungsleitung einen Stromversorgungsbus (53, 52), der mit dem Eingang der Versorgungsleitung durch ein erstes Schütz (57, 55) verbunden ist und mit dem Ausgang der Versorgungsleitung durch ein zweites Schütz (61, 59) verbunden ist, einen ersten Spannungssensor (65, 63), der eine Spannung zwischen dem Eingang und dem ersten Schütz misst, und einen zweiten Spannungssensor (73, 71), der eine Spannung zwischen dem zweiten Schütz und dem Wandler misst, einen ersten Stromsensor (67, 69), der einen Strom zwischen dem ersten Schütz und dem Bus misst, und einen zweiten Stromsensor (75, 77) umfasst, der einen Strom zwischen dem zweiten Schütz und dem mit der Versorgungsleitung verbundenen Wandler misst, wobei das Verteilerschütz den Stromversorgungsbus der Stromversorgungsleitung mit dem Stromversorgungsbus der zweiten Stromversorgungsleitung verbindet, wobei das Verfahren das Aktivieren eines Mittels zur Deaktivierung des Antriebspropellers, um die Drehung des Antriebspropellers (100) zu verhindern, und das Versorgen einer Parksteckdose (42) mit Strom, die mit dem Leistungsausgang verbunden ist, wenn der Propeller daran gehindert wird, sich zu drehen, sodass der zweite Leistungswandler elektrische Energie von der Parksteckdose zur zweiten Batterie überträgt, das Schließen des zweiten Schützes (61) der Versorgungsleitung (24) und des Umverteilungsschützes (80), das Öffnen des zweiten Schützes (59) der zweiten Versorgungsleitung (22) und das Steuern des zweiten Leistungswandlers (13) anhand der von dem ersten und dem zweiten Spannungssensor gemessenen Werte und der von dem ersten und dem zweiten Stromsensor gemessenen Werte, sodass der Leistungswandler elektrische Energie von der Parksteckdose zur ersten Batterie überträgt.

## Claims

1. An electrical propulsion chain (2) for an aircraft (1) including a device for charging a battery (15, 16), a first propulsion electric rotary machine (4) configured to drive a propeller (100) of the aircraft, a second propulsion electric rotary machine (5) configured to drive a propeller (100) of the aircraft, an electrical distribution device (14), a first battery (15), a second battery (16) and a first power converter (12),
- the charging device comprising a second reversible electrical power converter (13) including a power inlet (132) configured to be connected to the second battery (16) and a power outlet (134) connected to the second propulsion electric rotary machine (5) in such a way that the second power converter transfers electrical energy between the second electric machine and the second battery,
- the charging device further comprising a means for deactivating the propeller configured to prevent rotation of the propeller (100), and a parking socket (42) connected to the power outlet,
- the electrical distribution device including an electrical supply line (24) including an inlet (39, 40) connected to the second battery (16) and an outlet (35, 36) connected to the power inlet (132) of the second converter (13),
**characterised in that**
- the electrical distribution device (14) including a second electrical supply line (22) comprising an inlet (31, 32) connected to the battery (15) and an outlet (27, 28) connected to the power inlet (122) of the first power converter (12),
- each electrical supply line (21, 22, 23, 24) comprising an electrical supply bus (50, 51, 52, 53) connected to the inlet (29, 30, 31, 32, 37, 38, 39, 40) of said supply line by a first contactor (54, 55, 56, 57) and connected to the outlet (25, 26, 27, 28, 33, 34, 35, 36) of said supply line by a second contactor (58, 59, 60, 61), a first voltage sensor (62, 63, 64, 65) measuring a voltage between said inlet and the first contactor, a second voltage sensor (70, 71, 72, 73) measuring a voltage between the second contactor and the converter (12, 13), a first current sensor (66, 67, 68, 69) measuring a current between the first contactor and the bus and a second current sensor (74, 75, 76, 77) measuring a current between the second contactor and the converter connected to said supply line, and a control circuit (43) configured to control the converter and the first and second contactors from the values measured by the first and second voltage sensors and values measured by the first and second current sensors,
- the distribution device further including a distribution contactor (80) connecting the electrical supply bus (53) of the supply line (24) to the electrical supply bus (51) of the second electrical supply line (22), the control circuit (43) being configured to control the distribution contactor.

2. The electrical propulsion chain (2) for an aircraft (1) according to claim 1, wherein the means for deactivating the propeller (100) comprises a charging contactor (41) connecting the power outlet of the second converter (13) to the second electric rotary machine (5).

3. The electrical propulsion chain (2) according to claim 2, wherein the second power converter (13) comprises a first reversible conversion module (20) connecting the power inlet (132) to the power outlet (134) and a second conversion module (19) connecting a second power inlet (131) to a second power outlet (133), the conversion modules being independent of each other, the electrical distribution device including a third electrical supply line (23) including an inlet (37, 38) connected to the second battery (16) and an outlet (33, 34) connected to the second power inlet (131) of the second converter (13), the second electric rotary machine (5) comprising two redundant sets of stator coils (9, 11), a first set of stator coils (11) being connected to the charging contactor (41) and the second set of stator coils (9) being connected to the second power outlet (133) of the converter (13).

4. The electrical propulsion chain (2) for an aircraft according to claim 1, wherein the means for deactivating the propeller (100) comprises a clutch (103) configured to disengage the propeller (100) from a shaft (102) of the propulsion electric rotary machine (5) to prevent rotation of the propeller (100).

5. The electrical propulsion chain (2) according to claim 4, wherein the second power converter (13) comprises a first reversible conversion module (20) connecting the power inlet (132) to the power outlet (134) and a second reversible conversion module (19) connecting a second power inlet (131) to a second power outlet (133), the conversion modules being independent of each other, the electrical distribution device including a second electrical supply line (23) including an inlet (37, 38) connected to the second battery (16) and an outlet (33, 34) connected to the second power inlet (131) of the second converter (13), the second electric rotary machine (5) comprising two redundant sets of stator coils (9, 11), a first set of stator coils (11) being connected to the power outlet (134) and the second set of stator coils (9) being connected to the second power outlet (133) of the converter (13).

6. The electrical propulsion chain according to claim 3 or according to claim 5, further including a redistribution contactor (79) connecting the electrical supply bus (53) of the electrical supply line (24) to the electrical supply bus (52) of the third electrical supply line (23), the control circuit (43) being further configured to control the redistribution contactor.

7. The electrical propulsion chain (2) according to any of claims 1 to 6, wherein the control circuit (43) is further configured to control a parking unit (3) supplying the parking socket (42) when the propeller (100) is prevented from rotating.

8. An aircraft (1) including an electrical propulsion chain (2) according to any of claims 1 to 7 and as many propulsion nacelles (6, 7) as there are propulsion electric rotary machines (4, 5), each electric machine being disposed in a different nacelle, the means for deactivating the propeller and the parking socket (42) being disposed in one of the nacelles (7).

9. A method for charging a battery (15, 16) of an aircraft (1) comprising a first propulsion electric rotary machine (4), a first power converter (12), a first battery (15), a second reversible electrical power converter (13) including a power inlet (132) connected to the second battery (16) and a power outlet (134) connected to a second propulsion electric rotary machine (5) of the aircraft in such a way that the power converter transfers electrical energy between the second electric machine and the second battery, and an electrical distribution device (14) including a supply line (24) comprising an inlet (39, 40) connected to the second battery (16) and an outlet (35, 36) connected to the power inlet (132) of the second converter (13), a second supply line (22) comprising an inlet (31, 32) connected to the first battery (15) and an outlet (27, 28) connected to a power inlet (122) of the first converter, and a distribution contactor (80), each supply line comprising an electrical supply bus (53, 52) connected to the inlet of said supply line by a first contactor (57, 55) and connected to the outlet of said supply line by a second contactor (61, 59), a first voltage sensor (65, 63) measuring a voltage between said inlet and the first contactor, and a second voltage sensor (73, 71) measuring a voltage between the second contactor and the converter, a first current sensor (67, 69) measuring a current between the first contactor and the bus and a second current sensor (75, 77) measuring a current between the second contactor and the converter connected to said supply line, the distribution contactor connecting the electrical supply bus of the first electrical supply line to the electrical supply bus of the second electrical supply line, the method comprises activating a means for deactivating the propeller to prevent rotation of the propeller (100) and supplying a parking socket (42) connected to the power outlet when the propeller is prevented from rotating in such a way that the second power converter transfers electrical energy from the parking socket to the second battery, closing the second contactor (61) of the supply line (24) and the redistribution contactor (80), opening the second contactor (59) of the second supply line (22), and controlling the second power converter (13) from the values measured by the first and second current and voltage sensors of the supply line and the second supply line in such a way that the power converter transfers electrical energy from the parking outlet to the first battery.
